Europäisches Patentamt

European Patent Office

Office européen des brevets

(19)

(11) Numéro de publication: **0 040 574**

**A1**

(12) # DEMANDE DE BREVET EUROPEEN

(21) Numéro de dépôt: **81400785.2**

(22) Date de dépôt: **19.05.81**

(51) Int. Cl.³: **B 60 T 7/08**
**F 16 D 65/54**

(30) Priorité: **19.05.80 FR 8011097**

(43) Date de publication de la demande:
**25.11.81 Bulletin 81/47**

(84) Etats contractants désignés:
**DE GB IT SE**

(71) Demandeur: **PAUMELLERIE ELECTRIQUE Société dite:**
**La Rivière de Mansac**
**F-19600 Larche(FR)**

(72) Inventeur: **Saigne, Gérard**
**Le Suquat La Rivière de Mansac**
**F-19600 Larche-Corrèze(FR)**

(74) Mandataire: **Polus, Camille et al,**
**c/o Cabinet Lavoix 2, Place d'Estienne d'Orves**
**F-75441 Paris Cedex 09(FR)**

(54) **Mécanisme de commande de frein à main.**

(57) Dans le mécanisme représenté, le serrage du frein est obtenu au moyen d'un galet (43), porté par une chape (18), qui coopère avec une rampe (44) dont le profil assure un effet multiplicateur d'effort. La traction sur le câble (20) est transmise par une barre crantée (56) qui en coopération avec deux demi-coquilles (67), permet un rattrapage de jeu automatique.

EP 0 040 574 A1

./...

FIG.1

1

# Mécanisme de commande de frein à main.-

L'invention a pour objet un mécanisme de commande de frein à main, en particulier pour véhicule automobile, comportant un support, destiné à être fixé à un châssis, sur lequel est monté pivotant un levier de manoeuvre dont le bras long est relié au support par un dispositif d'encliquetage soumis à l'action d'une tige de verrouillage, et dont le bras court est relié à une ferrure d'ancrage d'un câble, ou moyen équivalent, de commande du frein et a avec le support une liaison adaptée pour créer un effet multiplicateur d'effort.

Dans le mécanisme de ce type connu par DE-B-1 157 084 (SEEHAFER), l'effet multiplicateur d'effort est obtenu par une diminution de la longueur du bras de levier court, qui rend nécessaire un montage flottant du levier, en ce sens que l'axe de pivotement est engagé dans une ouverture oblongue du levier permettant à ce dernier de se déplacer suivant son axe longitudinal. Il en résulte une instabilité dans la retenue produite par le dispositif d'encliquetage. En pratique, le mécanisme connu, qui est prévu pour des applications dans le machinisme agricole, ne peut pas être utilisé dans une voiture automobile.

Le but de l'invention est de réaliser un mécanisme de commande de frein à main, du type mentionné au début, dans lequel l'inconvénient signalé est supprimé.

Ce mécanisme est caractérisé en ce que le bras court est de longueur constante, et en ce que l'effet multiplicateur d'effort est obtenu au moyen d'une suspente articulée sur le bras court.

Dans un tel mécanisme, la présence d'une suspente articulée permet de créer un effet de genouillère, de sorte que la multiplication est due à l'augmentation de la force exercée et non pas à l'augmentation du bras

2

de levier.

La suspente peut constituer par elle-même un élément d'actionnement supportant un galet qui coopère avec une rampe dont le profil est établi de manière à produire, dans la direction correspondant à la mise en traction du câble de frein, une composante supérieure à la poussée exercée vers le bas par l'élément d'actionnement.

Il est également possible de prévoir comme suspente une biellette dont l'extrémité opposée à l'articulation sur le levier de manoeuvre constitue l'articulation centrale d'une genouillère dont l'une des biellettes est articulée sur le support et dont l'autre biellette, qui constitue l'élément d'actionnement, est articulée sur la ferrure d'ancrage du câble ou sur un organe relié à cette ferrure.

Pour réduire encore la course utile du levier et la rendre constante, l'invention propose une disposition complémentaire combinée avec le dispositif multiplicateur d'effort et caractérisée en ce que l'élément d'actionnement de ce dispositif est relié à la ferrure d'ancrage du câble de frein par l'intermédiaire d'un dispositif de rattrapage de jeu du système de freinage, qui, outre qu'il rend pratiquement invariable la course utile du levier, permet de supprimer tout réglage manuel du système de freinage.

Le dispositif de rattrapage de jeu comporte avantageusement deux demi-coquilles à denture interne appuyées axialement, suivant approximativement la ligne d'action du câble de frein, sur l'élément d'actionnement du dispositif multiplicateur, ou sur un élément solidaire de l'élément d'actionnement, et sollicitées radialement au contact de dentures conjuguées, formées sur une barre reliée à la ferrure d'ancrage, la coopération entre les dentures conjuguées des demi-coquilles et de la barre constituant un accouplement unidirectionnel tel que la barre peut être déplacée en exerçant une traction sur le câble, soit par l'élément d'actionnement agissant sous la commande du levier de manoeuvre, par l'intermédiaire des dentures conjuguées en prise, pour le serrage du frein, soit par un ressort de compression monté entre la barre et les demi-coquilles, qui, pour la position du levier de manoeuvre correspondant au desserrage du frein et lorsque le câble est détendu, astreint la barre à glisser entre les demi-coquilles en écartant radialement ces dernières, pour tendre le câble.

La mise en prise des dentures est obtenue de façon automatique grâce à la présence entre l'élément d'actionnement, ou un élément relié à l'élément d'actionnement, et les demi-coquilles d'une cuvette comportant une surface interne qui est appliquée au contact d'une surface adjacente des demi-coquilles et a un profil concave tel que les demi-coquilles sont sollicitées radialement l'une vers l'autre. Le contact de la cuvette a lieu de préférence avec une collerette des demi-coquilles contre laquelle prend appui l'une des extrémités du ressort de compression dont l'autre extrémité est appuyée sur une coupelle retenue sur l'extrémité correspondante de la barre de rattrapage de jeu.

L'invention sera explicitée au cours de la description qui va suivre, en se référant aux dessins annexés, dans lesquels :

- la Fig. 1 est une vue en coupe longitudinale du mécanisme de commande suivant l'invention;

- les Fig. 2 à 5 sont des vues en coupe suivant les lignes 2-2, 3-3, 4-4, 5-5 respectivement de la figure 1;

- les Fig. 6 et 7 sont des schémas illustrant l'effet multiplicateur d'effort obtenu dans le mécanisme par la coopération d'un galet rotatif avec une rampe de profil approprié;

- la Fig. 8 est un schéma illustrant la mise en

4

prise automatique entre deux demi-coquilles et une barre
de rattrapage de jeu;

    - la Fig. 9 est une vue correspondant à la figure 4,
représentant une variante de la barre de rattrapage de
jeu;

    - la Fig. 10 est une vue partielle, en plan, de la
barre de la figure 9;

    - la Fig. 11 représente schématiquement une variante
du dispositif multiplicateur d'effort;

    - la Fig. 12 représente une variante du dispositif
de déverrouillage de la tige de verrouillage du levier
de manoeuvre;

    - la Fig. 13 est une vue en plan représentant une
variante du mode d'ancrage du câble de commande de frein;

    - la Fig. 14 est une vue vue analogue à la Fig. 1
d'une autre mode d'exécution du mécanisme de commande
de frein;

    - la Fig. 15 est une vue de dessus du support de la

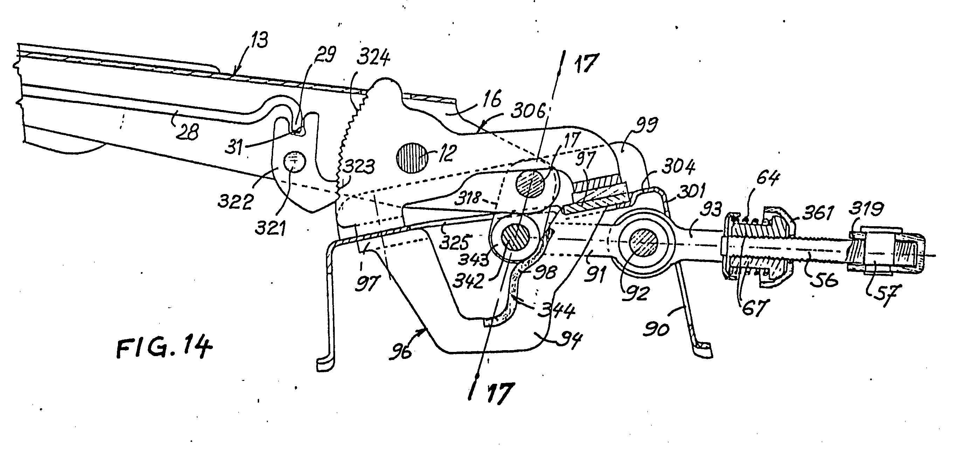

Fig. 14 et de la rampe;

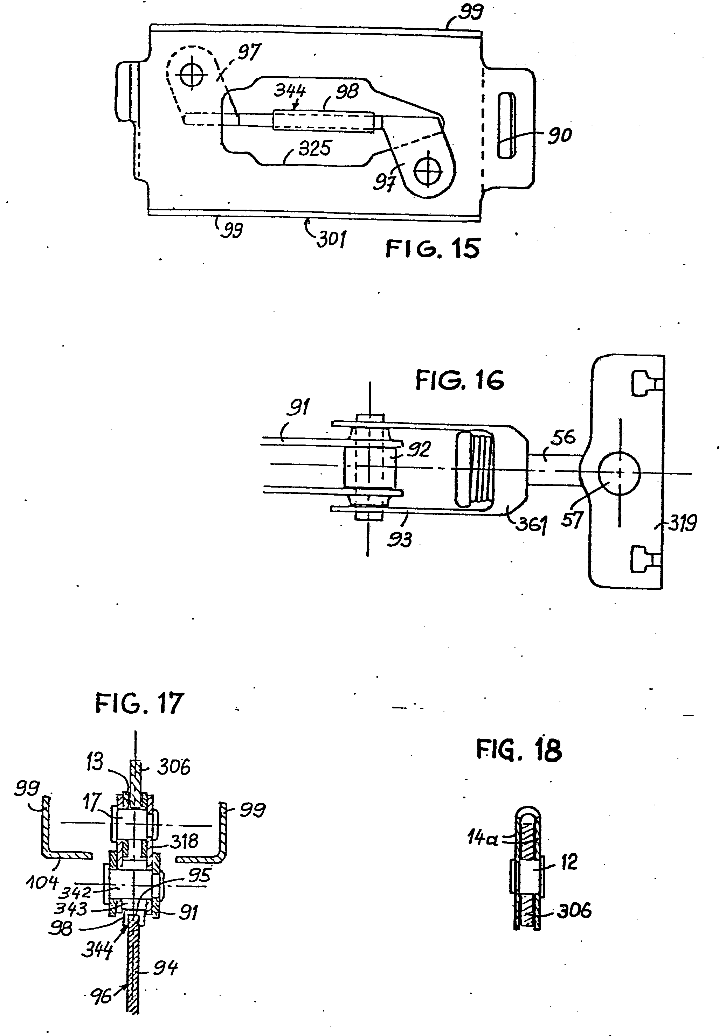

    - la Fig. 16 est une vue de dessus du dispositif de
rattrapage de jeu de la Fig. 14;

    - la Fig. 17 est une vue en coupe suivant la ligne
17-17 de la Fig. 14;

    - la Fig. 18 est une vue en coupe du levier de
manoeuvre.

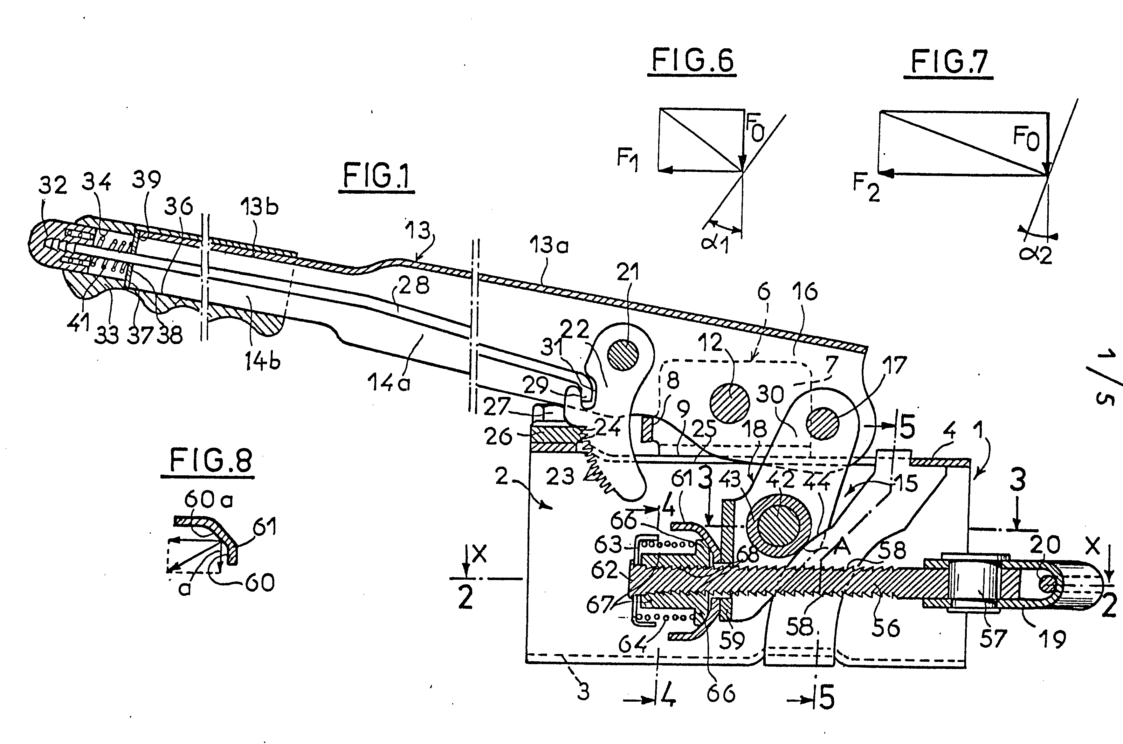

    Le mécanisme représenté aux figures 1 à 5, pour la
commande du frein à main d'un véhicule automobile, comporte un support 1 dont l'élément principal est constitué
par une pièce 2 de profil en oméga dont les ailes 3 sont
prévues pour être fixées sur le plancher du véhicule, non
représenté, et dont le fond plat 4, parallèle aux ailes 3,
porte une monture 6 qui comprend deux branches planes
parallèles 7 réunies par une traverse 8 et prolongées
chacune par un rebord 9 coudé à 90° et boulonné sur le
fond de chape 4. Entre les branches 7 de la monture 6 est

5

fixé un axe 12 au moyen duquel est monté pivotant un levier de manoeuvre 13 qui, sur la plus grande partie de sa longueur, a un profil en U définissant deux flancs 14. Sur la moitié 13a de la longueur du levier 13, qui est adjacente à l'articulation 12, les flancs 14a, plans et parallèles, sont relativement rapprochés et, au droit de la monture 6, ils ont un contact glissant avec les branches 7 de cette monture. Au-delà de l'axe 12, les flancs 14a se prolongent en formant un bras court 16 à l'extrémité duquel est articulée, au moyen d'un axe 17, une suspente 18 en forme de chape, qui fait partie d'un dispositif multiplicateur d'effort 15 et constitue un élément d'actionnement d'une ferrure d'ancrage 19 pour le câble 20 de commande du frein.

Dans la zone étroite 13a du levier de manoeuvre 13 est également fixé, en avant de l'axe 12, un axe 21 au moyen duquel est monté pivotant, entre les flancs 14a, un levier d'encliquetage 22 sur lequel est formé un secteur denté 23 qui peut venir en prise avec les deux dents 24 formées sur le bord d'une lame plate 26, formant cliquet, qui est fixée au moyen d'une vis 27 sur le fond 4 de la chape 2. Le secteur denté 23 qui, comme le bras 16, traverse une ouverture 25 du fond de chape 4, est sollicité au contact du cliquet 24 par une tige 28 disposée entre les flancs 14 du levier 13, dont l'une des extrémités 29, coudée, est engagée et retenue dans une encoche 31 du levier d'encliquetage 22 et dont l'autre extrémité forme un bouton-poussoir 32 qui fait normalement saillie sur l'extrémité correspondante d'une poignée 33 coiffant la majeure partie de la seconde moitié 13b du levier de manoeuvre 13, dans laquelle les flancs 14b, plans et parallèles, sont plus largement espacés que sur la moitié 13a.

A l'intérieur de la poignée 33 le bouton-poussoir 32 peut coulisser dans un alésage 34 qui est séparé de la cavité 36 recevant la partie 13b du levier de manoeuvre par un épaulement 37 contre lequel est appuyée une rondelle 38 traversée par la tige 28 et elle-même serrée au contact de la section terminale 39 du levier 13. Un ressort 41 est comprimé entre le bouton-poussoir 32 et la rondelle 38.

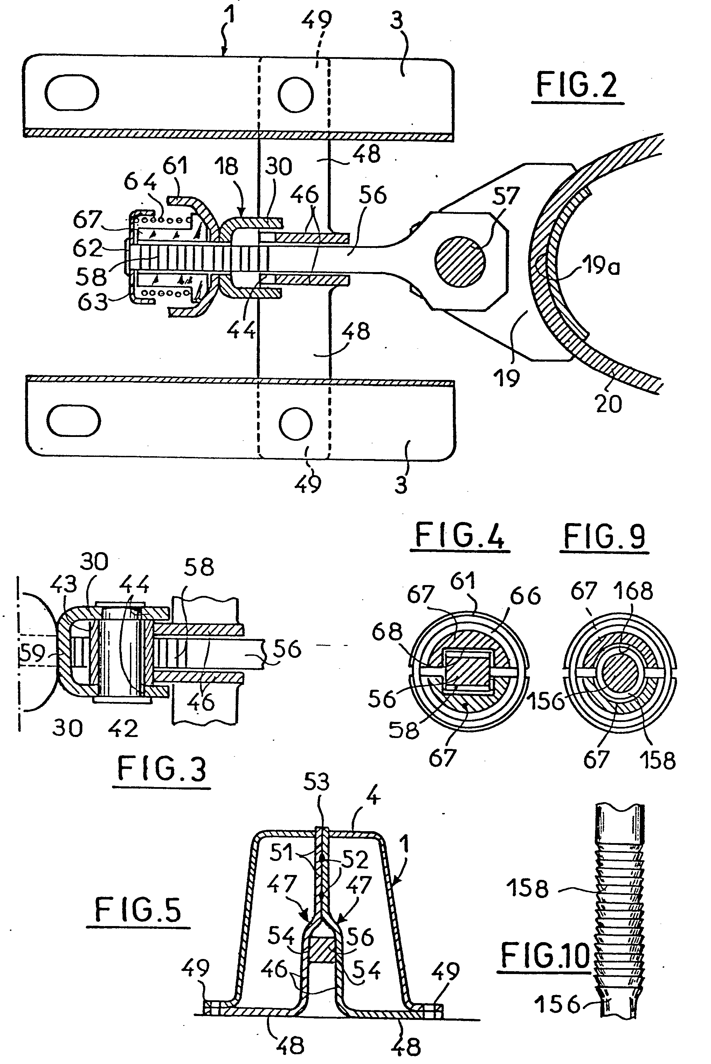

Entre les branches 30 de la chape 18 du dispositif multiplicateur d'effort 15 est fixé un axe 42 autour duquel est monté rotatif un galet 43 coopérant avec une rampe 44 solidaire du support 1. Comme le montrent les figures 3 et 5, la rampe 44, qui présente une courbure convexe, est définie par la tranche de deux parties planes parallèles et espacées 46, formées chacune dans une pièce façonnée en tôle 47 comportant une semelle 48 insérée sous une partie relevée 49, formant pontet, de l'aile 3 correspondante du support 1. Les deux parties planes et verticales 46 se prolongent vers le haut en formant deux lames planes 51 appuyées l'une sur l'autre et réunies par des soudures 52. L'extrémité supérieure 53 des deux lames est encastrée dans l'extrémité adjacente de l'ouverture 25 du fond de chape 4. Des trous en coïncidence formés dans les semelles 48 et dans les pontets 49 permettent de fixer simultanément sur le plancher le support 1 et les pièces 47 dans lesquelles la rampe est formée.

Ainsi qu'il ressort des figures 2, 3 et 5, les faces internes des parties planes espacées 46, définissant la rampe 44, servent au guidage glissant des deux faces latérales planes et lisses 54 d'une barre 56 de section rectangulaire qui fait partie d'un dispositif de rattrapage de jeu et dont l'une des extrémités est munie d'un axe 57 au moyen duquel est articulée la ferrure 19 d'ancrage du câble 20. La barre 56, dans les faces supérieure et inférieure de laquelle sont formés des crantages ou dentures 58, traverse le fond 59 de

7

la chape 18 et une cuvette flottante 61 appliquée sur
la face externe du fond 59, et elle s'étend au-delà de
la cuvette sur une certaine longueur pour se terminer
par un collet 62 qui retient axialement une coupelle 63
contre laquelle est appuyée l'une des extrémités d'un
ressort de compression 64 dont l'autre extrémité prend
appui sur deux collerettes 66 formées chacune sur une
demi-coquille 67 comportant une denture interne 68
conjuguée avec la denture externe correspondante 58 de
la barre 46. Les deux demi-coquilles 67, qui sont
pressées axialement au contact du fond de chape 59
par le ressort 64, sont sollicitées radialement l'une
vers l'autre de telle sorte que les dentures conjuguées
soient normalement en prise mutuelle.

La coopération entre les dentures conjuguées 58,
68 forme toutefois un accouplement unidirectionnel tel
qu'un déplacement axial relatif entre la barre crantée
56 et les demi-coquilles 67 est possible dans un sens,
moyennant un déplacement radial des demi-coquilles
qui les écarte l'une de l'autre. A cet effet, chaque
dent comporte un flanc orienté obliquement en faisant
un angle aigu avec l'axe de la barre 56, l'autre flanc
étant à peu près perpendiculaire à cet axe. En particulier, la barre 56 est astreinte, sous l'action du
ressort 64, à glisser vers la gauche (Fig. 1) en écartant les demi-coquilles lorsque, pour la position
représentée du levier 13 correspondant au desserrage du
frein, le câble de commande 20 est détendu, ce qui
assure automatiquement le rétablissement de la tension
du câble et le rattrapage du jeu du système de freinage.

Lorsque, pour le serrage du frein, on appuie sur
le bouton-poussoir 32 pour dégager le secteur denté 23
du cliquet 26 et qu'ensuite on fait pivoter vers le haut
le levier de manoeuvre 13, le galet 43 porté par la
chape 18 exerce une poussée verticale $F_0$ sur la rampe 44 dont le profil correspond à une courbe d'allure parabolique se développant vers le bas et vers la gauche, de sorte que le fond de chape 59 exerce une force F croissante orientée de droite à gauche, par l'intermédiaire de la cuvette 61, sur les demi-coquilles 67 en prise avec la barre 56 qui exerce ainsi la traction voulue sur le câble de commande de frein 20. La décomposition des forces en jeu représentée aux figures 6 et 7, où $\alpha$ désigne l'angle que fait la poussée $F_0$ avec la tangente à la courbe de la rampe 44, montre que la composante utile F, en principe horizontale, est égale à $F_0$ cot $\alpha$ , ce qui veut dire que pour toute valeur de $\alpha$ inférieure à 45°, la force F est supérieure à la poussée verticale $F_0$ exercée par le galet. Si, comme représenté à la figure 1, la tangente au point A où le galet est en contact avec la rampe 44 pour la position de desserrage du frein correspond à un angle $\alpha$ au plus égal à 45° et que cet angle décroît ensuite le long de la courbe que suit le galet, il est clair qu'est créé un effet multiplicateur d'effort qui s'ajoute à celui produit de façon classique par le levier 13 lui-même.

Le schéma de la figure 8 montre en outre que la pression de contact entre la zone conique 60a de la face interne concave 60 de la cuvette 61 avec la surface adjacente sphérique des collerettes 66 crée une force radiale a qui assure de façon automatique le serrage des demi-coquilles au contact de la barre 56 et le maintien en prise des dentures conjuguées 58, 68.

Aux figures 9 et 10, la barre de rattrapage de jeu 156 est non pas prismatique mais cylindrique et comporte une denture périphérique continue 158. La denture interne conjuguée 168 des demi-coquilles est évidemment modifiée de façon correspondante.

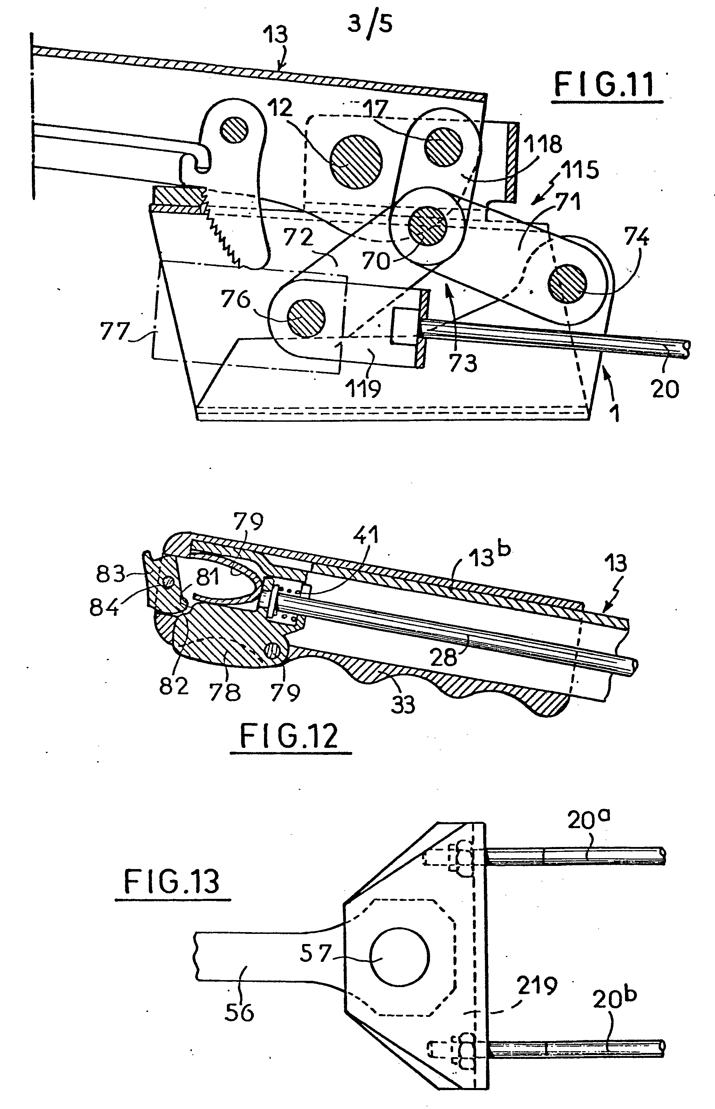

A la figure 11, le dispositif multiplicateur d'effort 115 comporte une suspente 118 constituée par une biellette dont l'extrémité opposée à l'articulation 17 sur le levier 13 se confond avec l'articulation centrale 70 commune aux deux biellettes 71, 72 d'une genouillère 73. La biellette 71 est articulée en 74 sur le support 1 et l'autre biellette, 72, est articulée en 76 sur la ferrure 119 d'ancrage du câble de frein 20. Un dispositif de rattrapage de jeu, représenté symboliquement en 77, peut être prévu.

La figure 12 représente une variante des moyens de déverrouillage de la tige de verrouillage 28 du levier de manoeuvre 13. Le bouton-poussoir 32 de la figure 1 est remplacé par un organe d'actionnement 78 monté pivotant en 79 sur la poignée 33, en position latérale. Cet organe 78, qui est soumis à l'action d'un ressort en épingle à cheveux 79, comporte un cran d'arrêt 81 dans lequel peut venir s'engager un appendice 82 formé dans un organe de retenue 83 monté pivotant en 84 dans la face terminale de la poignée 33. Cette disposition offre une sécurité contre une manoeuvre de déverrouillage intempestive de la part d'un enfant, du fait que l'organe d'actionnement 78 ne peut être enfoncé qu'après déblocage de l'organe de retenue 83.

A la figure 13, la ferrure 219 d'ancrage du câble de frein, au lieu de former une boucle autour d'un guidage convexe 19a (Fig. 2), est constituée par un palonnier auquel sont fixés les deux brins de câble 20a, 20b.

Dans l'exemple d'exécution de la Fig. 14, le dispositif d'encliquetage comporte un levier d'encliquetage 322, articulé en 321 sur le levier 13 et muni d'une denture 323, qui peut venir en prise avec une denture conjuguée 324 prévue sur le bord terminal en forme de secteur d'une monture 306 enserrée par les branches 14a du levier et fixée sur la face supérieure

10

inclinée 304 du support en oméga 301 solidarisé avec le plancher du véhicule.

Sur l'extrémité du bras court 16 du levier 13, dont l'axe de pivotement 12 est porté par la monture 306, est articulée en 17 l'une des extrémités d'une biellette 318 dont l'autre extrémité est articulée, au moyen d'un axe 342 supportant à rotation le galet 343, entre les branches d'une chape 91 articulée elle-même au moyen d'un axe 92 entre les branches d'une autre chape 93 qui traverse une ouverture 90 du support 301 et dont le fond constitue la cuvette 361 d'un dispositif de rattrapage de jeu pratiquement identique à celui des figures 1 à 3. La barre crantée 56 est toutefois munie à son extrémité libre (Fig. 14 et 16) d'un palonnier 319, articulé en 57, peu différent du palonnier 219 de la figure 13, pour l'ancrage des brins du câble de frein.

Quant à la rampe 344 avec laquelle coopère le galet 343, son profil est défini par la tranche interne 95 de l'une des branches 94 d'une lame 96 approximativement en forme de U, fixée au moyen de semelles 97 sur la face supérieure 304 du support 301, conjointement avec la base de la monture 306. Pour améliorer le frottement entre le galet et la rampe 344, la tranche 95 est recouverte d'une garniture en matière plastique 98.

Pour augmenter la rigidité du support 301, la face supérieure 304 est munie de deux ailes 99 formant nervures.

11

REVENDICATIONS

1 - Mécanisme de commande de frein à main, en particulier pour véhicule automobile, comportant un support (1, 301), destiné à être fixé à un châssis, sur lequel est monté pivotant un levier de manoeuvre (13) dont le bras long est relié au support par un dispositif d'encliquetage (22,26 - 322, 306) soumis à l'action d'une tige de verrouillage (28), et dont le bras court (16) est relié à une ferrure d'ancrage (19, 119, 219, 319) d'un câble (20), ou moyen équivalent, de commande du frein, et a avec le support une liaison adaptée pour créer un effet multiplicateur d'effort, caractérisé en ce que le bras court (16) est de longueur constante, et en ce que l'effet multiplicateur d'effort est obtenu au moyen d'une suspente (18, 118, 318), articulée sur le bras court.

2 - Mécanisme suivant la revendication 1, caractérisé en ce que la suspente constitue un élément d'actionnement (18, 318) relié à la ferrure (319) d'ancrage du câble et supporte un galet rotatif (43, 343), coopérant avec une rampe (44, 344), solidaire du support dont le profil est établi de manière à produire, dans la direction correspondant à la mise en traction du câble de frein (20), une composante (F), supérieure à la poussée ($F_0$) exercée vers le bas par l'élément d'actionnement (18, 318).

3 - Mécanisme suivant la revendication 1, caractérisé en ce que la suspente est une biellette (118) dont l'extrémité opposée à l'articulation (17) sur le levier de manoeuvre constitue l'articulation centrale (70) d'une genouillère (73), dont l'une des biellettes (71) est articulée sur le support (1) et dont l'autre biellette (72), qui constitue un élément d'actionnement, est articulée sur la ferrure (119) d'ancrage du câble ou sur un organe relié à cette ferrure.

12

4 - Mécanisme suivant l'une des revendications 1 à 3, caractérisé en ce que l'élément d'actionnement (18, 72, 318), du multiplicateur d'effort (15, 115) est relié à la ferrure (19, 119, 319) d'ancrage du câble de frein par l'intermédiaire d'un dispositif de rattrapage de jeu.

5 - Mécanisme suivant la revendication 4, caractérisé en ce que le dispositif de rattrapage de jeu comporte deux demi-coquilles (67) à denture interne (68) appuyées axialement, suivant approximativement la ligne d'action du câble de frein (20), sur l'élément d'actionnement (18), ou sur un élément (93) relié à l'élément d'actionnement (318), et sollicitées radialement au contact de dentures conjuguées (58) formées sur une barre (56, 156), reliée à la ferrure d'ancrage, la coopération entre les dentures conjuguées des demi-coquilles et de la barre constituant un accouplement unidirectionnel tel que la barre peut être déplacée en exerçant une traction sur le câble, soit par l'élément d'actionnement (18, 318) agissant sous la commande du levier de manoeuvre (13), par l'intermédiaire des dentures conjuguées en prise, pour le serrage du frein, soit par un ressort de compression (64) monté entre la barre et les demi-coquilles, qui, pour la position du levier de manoeuvre correspondant au desserrage du frein et lorsque le câble est détendu, astreint la barre à glisser entre les demi-coquilles en écartant radialement ces dernières, pour tendre le câble.

6 - Mécanisme suivant la revendication 5, caractérisé en ce que, entre l'élément d'actionnement (18), ou l'élément (93) relié à l'élément d'actionnement (318) et les deux demi-coquilles (67), est interposée une cuvette (61, 361), comportant une surface interne (60a) qui est appliquée au contact d'une surface adjacente des demi-coquilles et a un profil concave tel que les demi-coquiles sont sollicitées radialement l'une vers l'autre.

7 - Mécanisme suivant la revendication 6, caractérisé en ce que la surface des demi-coquilles (67) qui est en contact avec la cuvette (61, 361) est formée sur une collerette (66) contre laquelle prend appui l'une des extrémités du ressort de compression (64), dont l'autre extrémité est appuyée sur une coupelle (63) retenue sur l'extrémité correspondante de la barre de rattrapage de jeu (56, 156).

8 - Mécanisme suivant l'une des revendications 5 à 7, caractérisé en ce que la barre de rattrapage de jeu (56) comporte deux faces planes parallèles sur chacune desquelles est formée une denture (58), la denture interne conjuguée (68) de la demi-coquille (67) correspondante étant elle-même formée dans une face plane.

9 - Mécanisme suivant l'une des revendications 5 à 7, caractérisé en ce que la barre de rattrapage de jeu (156) a une forme cylindrique et comporte une denture (158) sur sa surface périphérique, la denture interne conjuguée (168) de la demi-coquille (67) correspondante étant elle-même formée dans une surface hémi-cylindrique.

10 - Mécanisme suivant la revendication 2, caractérisé en ce que l'élément d'actionnement est une chape (18) dont le fond (59) est relié à la ferrure (19) d'ancrage du câble.

11 - Mécanisme suivant la revendication 2, caractérisé en ce que l'élément d'actionnement est une biellette (318) dont l'extrémité opposée à l'articulation (17) sur le levier de manoeuvre (13) porte un axe (342) qui supporte à rotation le galet (343) et constitue une articulation pour une chape (91) reliée à la ferrure (319) d'ancrage du câble de frein.

12 - Mécanisme suivant la revendication 2, caractérisé en ce que la rampe (344) est revêtue d'une garniture de frottement (98) en matière plastique.

13 - Mécanisme suivant la revendication 1, caractérisé en ce que le déverrouillage de la tige de verrouillage (28) du levier de manoeuvre (13) est obtenu au

14

moyen d'un organe (78) qui est monté pivotant, en position latérale, sur l'extrémité du levier formant poignée (33) et peut être bloqué par un organe de sécurité (83) monté pivotant dans la face terminale de la poignée.

FIG.1

FIG.6

FIG.7

FIG.8

FIG.2

FIG.3

FIG.4 FIG.9

FIG.5

FIG.10

FIG.11

FIG.12

FIG.13

FIG.14

FIG. 15

FIG. 16

FIG. 17

FIG. 18

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| X | US - A - 2 190 972 (WAGNER ELECTRIC CORPORATION) <br> * Page 1, colonne de gauche, lignes 23-55; colonne de droite, en entier; page 2, colonne de gauche, lignes 1,2; figures 1,2,3 * <br><br> -- | 1 | B 60 T 7/08 <br> F 16 D 65/54 |
| | FR - A - 2 088 282 (H. SCHROTER) <br> * Page 5, lignes 32-40; page 6, en entier; figure 4 * <br><br> -- | 1,2,11 | |
| D | DE - B - 1 157 084 (W. SEEHAFER) <br> * En entier; figures 1-5 * <br><br> -- | 1,2,10 | DOMAINES TECHNIQUES RECHERCHES (Int. Cl.³) <br><br> B 60 T <br> F 16 D |
| | US - A - 2 588 027 (AMERICAN FORGING & SOCKET CO) <br> * Colonne 3, lignes 35-75; colonne 4, en entier; colonne 5, lignes 1-70; colonne 6, lignes 50-75; colonne 7, lignes 1-3; figures 1,4,5,6 * <br><br> -- | 1,4,5, 6,9 | |
| | US - A - 1 741 365 (E. HEYMANN) <br> * Page 1, colonne de droite, lignes 60-73; page 2, colonne de gauche, lignes 15-65; colonne de droite, lignes 66-81; figures 1,2,3,6 * <br><br> -- | 1,8 | CATEGORIE DES DOCUMENTS CITES <br><br> X: particulierement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | FR - A - 1 266 561 (L. MARTIN) <br> * En entier; figures 1,2,3 * <br><br> -- ./. | 1,3 | |
| | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 09-07-1981 | CAPRARI |

OEB Form 1503.1 06.78

Office européen
des brevets

| Catégorie | Citation du document avec indication, en cas de besoin, des parties pertinentes | Revendication concernée |
|---|---|---|
| A | US - A - 3 333 660 (KELSEY-HAYES COMPANY)<br><br>* En entier; figures 1,3,4 *<br><br>---- | 1 |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)

OEB Form 1503.2  06.78